# NEUE EUROPÄISCHE PATENTSCHRIFT

(11) **EP 0 151 422 B2**
(45) Veröffentlichungstag und Bekanntmachung des Hinweises auf die Entscheidung über den Einspruch: **26.04.1995**
(45) Hinweis auf die Patenterteilung: 19.10.1988
(21) Anmeldenummer: 85100536.3
(22) Anmeldetag: 19.01.1985
(51) Int. Cl.: B30B 5/06, B27N 3/24

(54) **Doppelbandpresse für eine kontinuierlich vorlaufende Werkstoffbahn**
Double belt press for a continuously moving web
Presse à double ruban pour un lé en mouvement continu

(30) Priorität: 27.01.1984 DE 3402751
(43) Veröffentlichungstag der Anmeldung: 14.08.1985
(73) Patentinhaber: Held, Kurt, D-78647 Trossingen (DE)
(72) Erfinder: Held, Kurt, D-78647 Trossingen (DE)

(56) Entgegenhaltungen:
- DE-A- 2 105 575
- DE-A- 2 534 939
- DE-B- 1 938 280
- DE-B- 2 641 174
- DE-C- 1 084 014
- US-A- 3 340 795
- US-A- 3 521 522

## Beschreibung

Die Erfindung betrifft eine Doppelbandpresse für eine kontinuierlich vorlaufende Werkstoffbahn

Eine bekannte Presse dieser Art (DE-A-2 534 939) ist als Plattenkettenpresse ausgebildet, bei welcher die Druckplatten von Endlosplattenbändern gebildet sind. Die obere Umlenktrommel an der Auslaufseite der Presse kann zur Regelung des auf das Preßgut an dieser Stelle ausgeübten Druckes eingestellt werden, wobei die dieser oberen zugeordnete, untere Umlenkwalze unverstellbar gelagert ist. An der Einlaufseite der Presse verlaufen die Preßbänder nicht über jeweils eine einzige Umlenktrommel, sondern über eine Vielzahl von Umlenkrollen, die ebenfalls unverstellbar sind.

Bei einer bekannten Doppelbandpresse dieser Art (US-A-3 521 522) wird bei Verstellung der Presskraft der Umlenktrommeln durch die Stelleinrichtungen gleichzeitig die Spannung der Pressbänder mit verstellt. Bei Doppelbandpressen anderer Art (US-A-3 340 795 und DE-C 1 084 014) greifen an den Lagerblöcken der Umlenktrommeln Stelleinrichtungen an, deren Presskraft im wesentlichen senkrecht zur Ebene der Pressbänder verläuft, die jedoch einseitig an einem Maschinengestell abgestützt sind.

Mit Doppelbandpressen können unter Wärmeeinwirkung Werkstoffbahnen, beispielsweise in Gestalt von dekorativen, mehrlagigen Schichtstoffen, Spanplatten, Faserplatten, Sperrholzplatten, Elektrolaminate, kontinuierlich zu einem Fertigprodukt verpreßt werden.

Es ist bekannt, vor der Einlaufseite der Doppelbandpresse gesonderte Kalibrierwalzen anzuordnen, um auf die Werkstoffbahn vor deren Einlaufen in die Reaktionszone der Presse Walzenspalteffekte aufzubringen, d. h. eine Kalandrierung des Preßgutes durchfzuführen. Ein Kalander vor der Doppelbandpresse stellt einen zusätzlichen operativen Aufwand dar und verlängert die Vorrichtung insgesamt erheblich.

Es ist Aufgabe der Erfindung eine Doppelbundpresse so auszubilden, daß der Abstand der Umlenktrommeln eines Paares auf einfache Weise mit hoher Genauigkeit und Zuverlössigkeit eingestellt werden kann.

Diese Aufgabe wird erfindungsgemäß durch die Merkmale des Patentanspruchs 1 gelöst.

Die nachstehende Beschreibung einer bevorzugten Ausführungsform der Erfindung dient im Zusammenhang mit beiliegender Zeichnung der weiteren Erläuterung. Es zeigen:
Figur 1 schematisch eine Doppelbandpresse in Seitenansicht;
Figur 2 schematisch die Einlaufseite der Doppelbandpresse in Richtung des Pfeiles A in Figur 1 und
Fig. 3 schematisch eine Einzelheit im Walzenspalt der Umlenktrommel an der Einlaufseite der Presse.

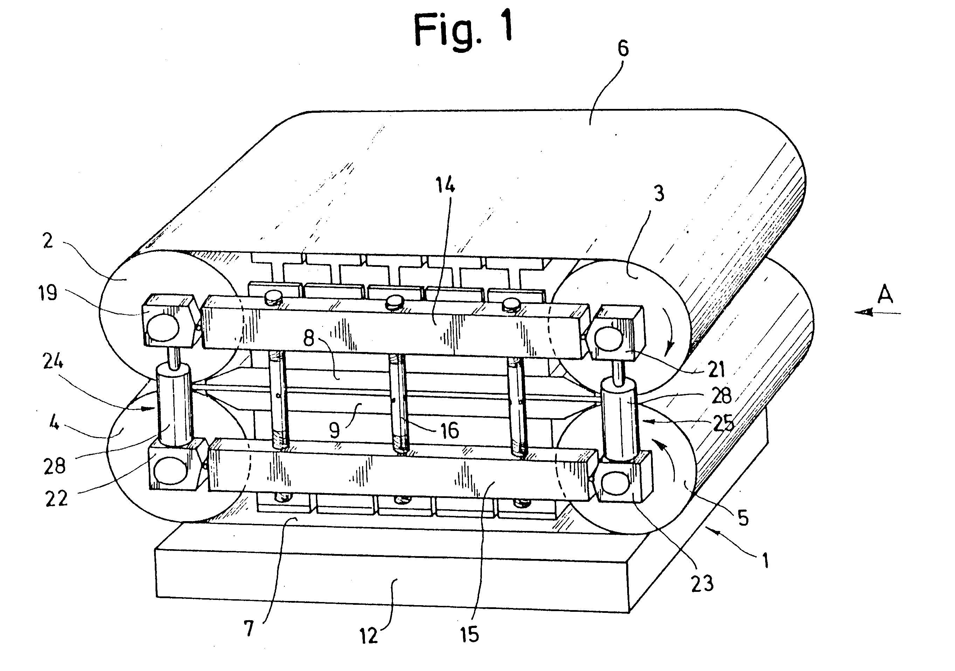

Bei der in Fig. 1 schematisch dargestellten Doppelbandpresse sind an einem Pressengestell 1 vier Umlenktrommeln 2, 3, 4 und 5 drehbar gelagert. Um die Trommeln 2, 3 ist ein oberes endloses Preßband 6, um die Trommeln 4, 5 ein unteres endloses Preßband 7 herum geführt. Die Preßbänder 6,7 können aus Metall, vorzugsweise rostfreiem Stahl, bestehen und ein- oder mehrlagig ausgebildet sein. Die Umlaufrichtung der Bänder 6, 7 ist durch die Pfeile in den Umlenktrommeln 3, 5 angegeben. Die an der Einlaufseite der Vorrichtung angeordneten Trommeln 3, 5 sind in an sich bekannter Weise beheizt, beispielsweise mit Hilfe eines erhitzten Thermoöls. Der auf eine (nicht dargestellte) an der Einlaufseite der Presse zwischen den Trommeln 3, 5 eingeführte Werkstoffbahn auszuübende Preßdruck wird von Druckplatten 8, 9 auf die Rückseiten der einander gegenüberliegenden Trums der Preßbänder 6 bzw. 7 und damit auf die zwischen diesen kontinuierlich vorlaufenden Werkstückbahn übertragen. Die Druckplatten 8, 9 sind beheizt, beispielsweise durch in ihnen zirkulierendes Thermoöl. Die an der Auslaufseite der Presse gelegenen Abschnitte der Druckplatten 8, 9 können - ebenso wie die dort liegenden Umlenktrommeln 2,4 - auch gekühlt werden.

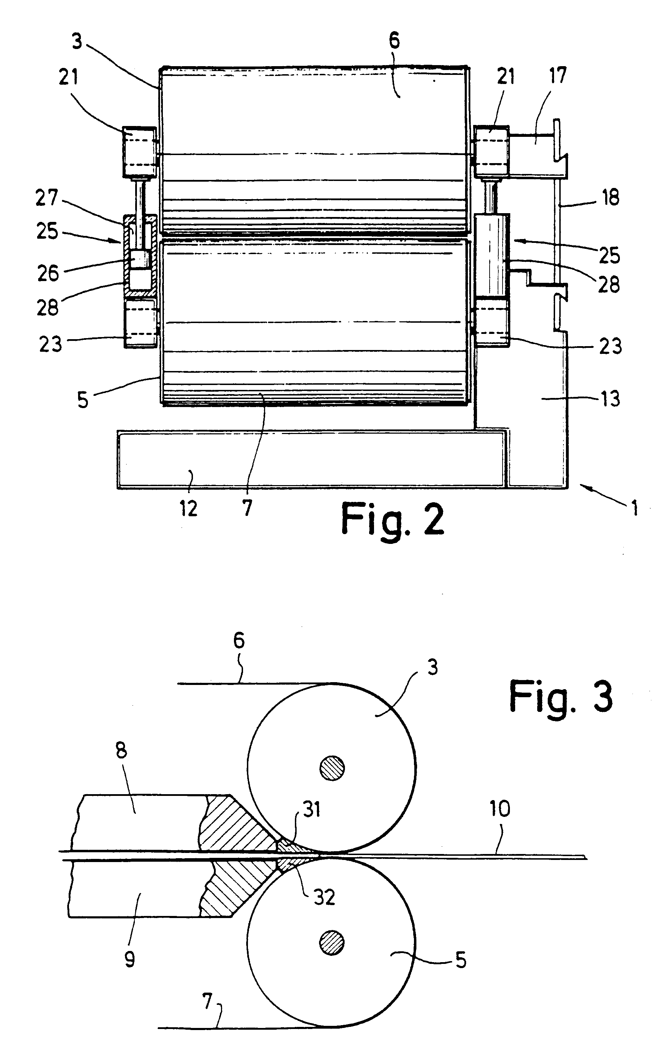

Das Pressengestell 1 umfaßt, wie aus der schematischen Fig. 2 hervorgeht, eine stationäre Bodenplatte 12, mit welcher zwei Ständer 13 starr verbunden sind. An den Ständern 13 ist eine Lageranordnung für die Umlenktrommeln 2, 3, 4 und 5 freitragend gelagert. Die Lageranordnung besteht im wesentlichen aus jeweils paarweise vorgesehenen Lagerbrücken 14, 15. Jeweils ein Paar von Lagerbrücken ist über höhenverstellbare Spindeln 16 miteinander verbunden, welche der Einstellung der Höhe der Reaktionszone zwischen den Preßbändern 6, 7 im Bereich der Druckplatten 8, 9 dienen. Die beiden Lagerbrücken 15 sind im Ständer 13 (Fig. 2) freitragend gelagert. Die Lagerbrükken 14 stützen sich über die Spindeln 16 auf den Lagerbrücken 15 ab. Über Arme 17 (Fig. 2), die von den oberen Lagerbrücken 14 abstehen, ist die aus diesen Lagerbrücken gebildete Anordnung über Zugkoppeln 18 mit dem Ständer 13 verspannt, so daß sich insgesamt eine stabile, freitragende Anordnung ergibt.

Wie aus Fig. 1 hervorgeht, sind an den Lagerbrücken 14, 15 Lagerblöcke 19, 21 bzw. 22, 23 gelenkig angeordnet, so daß sie mit einer senkrecht zur Hauptebene der Preßbänder 6, 7 gerichteten Bewegungskomponente aufeinander zu und voneinander weg bewegbar sind. In den Lagerblökken 19, 21, 22, 23 sind die Wellen der Umlenktrommeln 2, 3, 4 und 5 gelagert. Somit sind auch die Umlenktrommeln relativ zueinander und relativ zu den gestellfesten Druckplatten 8, 9 beweglich. An den Lagerblöcken 19, 22 bzw. 21, 23 greifen Stellglieder in Gestalt von druckmittelbetätigten Kolben-Zylinder-Aggregaten 24 bzw. 25 an. Wird der oberhalb des Kolbens 26 liegende Raum 27 des Zylinders 28 mit unter Druck stehendem Medium, z. B. Hydraulikflüssigkeit, beaufschlagt, so werden die Umlenktrommeln 3, 5 gegeneinander vorgespannt und erzeugen im Bereich des Trommelspaltes zwischen den Preßbändern 6, 7 eine erhebliche Pressung, die zur Kalandrierung der zugeführten Werkstoffbahn ausgenutzt werden kann. Diese Pressung ist höher als die Pressung zwischen den Druckplatten 8, 9 und kann zur Erzielung bestimmter Effekte in der z. B. harzgetränkten Werkstoffbahn ausgenutzt werden. Ein besonderes Kalanderwalzenpaar vor der Doppelbandpresse kann hierdurch entfallen.

Die an den linken und rechten Stirnseiten des Umlenktrommeln 2, 3, 4 und 5 angreifenden Kolben-Zylinder-Aggregate können unabhängig voneinander mit Druckmittel beaufschlagt werden, so daß die Pressung im Trommelspalt entlang der Trommelachsen zu- oder abnimmt. Dies kann z. B. zur Korrektur der Harzverteilung in einer zugeführten Werkstoffbahn ausgenutzt werden.

Die auszuübende Pressung im Spalt zwischen zwei übereinander liegenden Umlenktrommeln kann von einer fortlaufenden Abstandsmessung abhängig gemacht werden. Man gibt einen Abstands-Sollwert vor und regelt auf diese Weise den Preßdruck in Abhängigkeit von gemessenen Abstandswerten. Auch eine Regelung der Pressung in Abhängigkeit vom Druck in den Kolben-Zylinder-Aggregaten 24, 25 ist möglich. Auf diese Weise läßt sich das Preßgut im Trommelspalt mit großer Genauigkeit beeinflussen.

An den Lagerbrücken 14, 15 sind in an sich bekannter und daher nicht dargestellter Weise Einrichtungen, z. B. Druckmittelzylinder, vorgesehen, welche eine Abstandsveränderung der den jeweiligen Lagerbrücken zugeordneten Umlenktrommeln und somit eine Spannung des über sie geführten Preßbandes ermöglichen. Da diese Spannkraft praktisch senkrecht zu der von den Kolben-Zylinder-Aggregaten 24, 25 ausgeübten Preßkraft wirkt, können sich diese Kräfte gegenseitig nicht störend beeinflussen.

An der Austrittsseite eines der Kalandrierung dienenden Walzenspaltes zeigt die behandelte Werkstoffbahn manchmal unerwünschte Rückfedereffekte. Um solchen Effekten entgegenzuwirken, können, wie in Fig. 3 schematisch gezeigt, zwischen den Druckplatten 8, 9 und dem einer Kalandrierung dienenden Spalt zwischen den Trommeln 3, 5 Gleitkeile 31, 32 angeordnet werden, die sich über die gesamte Breite der Trommeln und der in Fig. 3 mit 10 bezeichneten Werkstoffbahn erstrecken. Diese Gleitkeile 31, 32 liegen mit einer flachen Seite an den Rückseiten der Preßbänder 6, 7 sowie mit einer entsprechend gekrümmten Flanke an den Mantelflächen der Trommeln 3, 5 an und werden von den Druckplatten 8, 9 in den Spalt zwischen den Trommeln 3, 5 gedrückt und dort festgehalten. Dabei können zwischen Druckplatte 8, 9 und Gleitkeil 31 bzw. 32 auch (nicht dargestellte) Druckglieder, z. B. in Gestalt von hydraulischen Kolben-Zylinder-Aggregaten, angeordnet sein, welche die Gleitkeile 31, 32 fest in den Walzenspalt und gegen die Werkstoffbahn pressen. Auf diese Weise kann ein hoher Preßdruck zwischen dem Spart der Trommeln 3, 5 und den Druckplatten 8, 9 aufrecht erhalten werden, der eine « Rückfederung » der zwischen den Trommeln 3, 5 kalandrierten Werkstoffbahn 10 verhindert. Die Gleitkeile 31, 32 bestehen aus Metall und können gegebenenfalls auch heizbar ausgebildet sein.

In praktischen Anwendungsfällen der Erfindung wird es häufig ausreichend sein, lediglich an der Einlaufseite der Presse eine Kalandrierung zwischen den dort angeordneten Umlenktrommeln 3, 5 vorzunehmen. In diesem Falle können die an der Auslaufseite der Presse angeordneten Umlenktrommeln 2, 4 wie bisher starr an den Lagerbrücken 14, 15 angeordnet werden und die bei der dargestellten Ausführungsform dort vorgesehenen Kolben-Zylinder-Aggregate 24 können entfallen.

## Patentansprüche

1. Doppelbandpresse für eine kontinuierlich vorlaufende Werkstoffbahn (10) mit einem starren Pressengestell (1), mit vier an Lagerbrücken (14, 15) des Pressengestells drehbar gelagerten Umlenktrommeln (2, 3, 4, 5), mit einem oberen und einem unteren, über je zwei obere bzw. untere Umlenktrommeln geführten, endlosen Pressband (6, 7) und mit Druckplatten (8, 9) an den Rückseiten der Pressbänder zur Ausübung eines Pressdrucks auf die Werkstoffbahn, wobei die Umlenktrommeln (3, 5) relativ zu den Druckplatten beweglich angeordnet und zur Erzielung einer von der Pressung der Druckplatten unabhängigen, vorzugsweise höheren Pressung im Trommelspalt durch Stelleinrichtungen (24, 25) gegeneinander vorspannbar sind und hierzu die Umlenktrommeln an Lagerblöcken (21, 23) gelagert sind, die gelenkig mit den Lagerbrücken (14, 15 ) verbunden sind und an denen die Stelleinrichtungen (24, 25) angreifen, wobei diese jeweils einerseits am Lagerblock (19, 21) einer dem oberen Pressband (6) zugeordneten Umlenktrommel (2, 3) und andererseits am Lagerblock (22, 23) einer unter dieser Umlenk Trommel (2, 3) liegenden, dem unteren Pressband (7) zugeordneten Umlenktrommel (4, 5) angreifen.

2. Doppelbandpresse nach Anspruch 1, dadurch gekennzeichnet, daß an jeder Stirnseite der Umlenktrommeln (3, 5) voneinander unabhängig betätigbare Stelleinrichtungen (25) angeordnet sind.

3. Doppelbandpresse nach Anspruch 1 oder 2, dadurch gekennzeichnet, daß die Stelleinrichtung druckmittelbetätigte Kolben-Zylinder-Aggregate (24, 25) umfaßt.

4. Doppelbandpresse nach Anspruch 1, 2 oder 3, dadurch gekennzeichnet, daß die Pressung im Spalt zwischen den Umlenktrommeln (3, 5) regelbar ist.

5. Doppelbandpresse nach einem der Ansprüche 1 bis 4, dadurch gekennzeichnet, daß zwischen den Umlenktrommeln (3, 5) und den Druckplatten (8, 9) Gleitkeile (31, 32) angeordnet sind.

6. Doppelbandpresse nach Anspruch 5, dadurch gekennzeichnet, daß die Gleitkeile (31, 32) heizbar ausgebildet sind.

## Claims

1. Double belt press for a continuously moving web of material (10), with a rigid press support (1), with four deflecting drums (2, 3, 4, 5) rotatably mounted at bearing bridges (14, 15) of the press support, with an upper and a lower endless belt press (6, 7) guided over two upper deflecting drums and two lower deflecting drums, respectively, and with pressure plates (8, 9) at the rear sides of the press belts for exertion of a pressing force on the web of material, wherein the deflecting drums (3, 5) are arranged to be movable relative to the press plates and are prestressable against one another by setting devices (24, 25) for attainment of a pressure, which is independent of the pressure of the pressure plates and preferably higher, in the drum gap and for this purpose the deflecting drums are mounted at bearing blocks (21, 23) which are pivotably connected with the bearing bridges (14, 15) and at which the setting devices (24, 25) engage, wherein these engage each time on the one hand at the bearing block (19, 21) of a deflecting drum (2, 3) associated with the upper press belt (6) and on the other hand at the bearing block (22, 23) of a deflecting drum (4, 5) disposed under that deflecting drum (2, 3) and associated with the lower press belt.

2. Double belt press according to claim 1, characterised in that setting devices (25), which are actuable independently of one another, are arranged at each end face of the deflecting drums (3, 5).

3. Double belt press according to claim 1 or 2, characterised thereby that the setting device comprises piston-cylinder units (24, 25) actuated by pressure medium.

4. Double belt press according to claim 1, 2 or 3, characterised thereby that the pressure in the gap between the deflecting drums (3, 5) is regulable.

5. Double belt press according to one of claims 1 to 4, characterised thereby that slide wedges (31, 32) are arranged between the deflecting drums (3, 5) and the pressure plates (8, 9).

6. Double belt press according to claim 5, characterised thereby that the slide wedges (31, 32) are constructed to be heatable.

## Revendications

1. Presse à double bande de pression pour un matelas de matière à travailler (10) en mouvement continu, avec un bâti de presse (1) rigide, quatre rouleaux de renvoi (2,3,4,5) montés rotatifs dans des paliers portés par des longerons (14,15) du bâti de presse, une bande de pression supérieure (6) et une bande de pression inférieure (7) sans fin passant respectivement sur deux rouleaux de renvoi supérieurs et inférieurs, et des plaques de pression (8, 9) sur les faces postérieures des bandes de pression pour exercer une force de compression sur le matelas de matière à travailler, les rouleaux de renvoi (3,5) étant montés mobiles par rapport aux plaques de pression et pouvant être mis en état de précontrainte l'un contre l'autre par des dispositifs de réglage (24,25) pour l'obtention, dans la zone de serrage des rouleaux, d'une compression indépendante de la compression exercée par les plaques de pression et, de préférence, supérieure à celle-ci, et les rouleaux de renvoi étant à cet effet montés sur des blocs porte-palier (21,23) qui sont reliés de façon articulée à des longerons de paliers (14,15), et sur lesquels agissent des dispositifs de réglage (25), de telle façon que ces dispositifs agissent chacun d'une part sur un bloc porte-palier (19,21) d'un rouleau de renvoi (2,3) associé à la bande de pression supérieure (6), et d'autre part sur un bloc porte-palier (22,23) d'un rouleau de renvoi (4,5) disposé en-dessous du rouleau de renvoi précité (2,3) et associé à la bande de pression inférieure (7).

2. Presse à double bande de pression selon la revendication 1, caractérisée en ce que sont disposés sur chaque face d'extrémité des rouleaux de renvoi (3,5) des dispositifs de réglage (25) pouvant être actionnés indépendamment l'un de l'autre.

3. Presse à double bande de pression selon la revendication 1 ou 2, caractérisée en ce que les dispositifs de réglage comprennent des vérins (24,-25) à fluide de pression.

4. Presse à double bande de pression selon l'une quelconque des revendications 1 à 3, caractérisée en ce que la compression dans la zone de serrage entre les rouleaux de renvoi (3, 5) est réglable.

5. Presse à double bande de pression selon l'une quelconque des revendications 1 à 4, caractérisée en ce que les coins lisses (31, 32) sont disposés entre les rouleaux de renvoi (3, 5) et les plaques de pression (8, 9).

6. Presse à double bande de pression selon la revendication 5, caractérisée en ce que les coins lisses (31, 32) sont agencés pour pouvoir être chauffés.
